# EUROPÄISCHE PATENTSCHRIFT

(11) **EP 0 791 235 B1**
(45) Veröffentlichungstag und Bekanntmachung des Hinweises auf die Patenterteilung: **03.02.1999**
(21) Anmeldenummer: 96929266.3
(22) Anmeldetag: 16.08.1996
(51) Int. Cl.: H01R 43/048

(54) **VERFAHREN ZUM VERBINDEN VON SEIL- ODER KABELARTIGEN STRÄNGEN MIT AUFPRESSELEMENTEN SOWIE PRESSGERÄT ZUR DURCHFÜHRUNG DIESES VERFAHRENS**
METHOD OF JOINING LENGTHS OF ROPE OR CABLE TO PRESS-ON ELEMENTS, AND COMPRESSION DEVICE FOR CARRYING OUT THE METHOD
PROCEDE D'ASSEMBLAGE DE CABLES OU CORDES ET D'ELEMENTS A EMMANCHER, ET DISPOSITIF DE COMPRESSION POUR REALISER CE PROCEDE

(30) Priorität: 07.09.1995 DE 19533054
(43) Veröffentlichungstag der Anmeldung: 27.08.1997
(73) Patentinhaber: NOVOPRESS GMBH PRESSEN UND PRESSWERKZEUGE & CO. KG., 41460 Neuss (DE)
(72) Erfinder: NGHIEM, Kuang, Long, D-47804 Krefeld (DE)
(74) Vertreter: Paul, Dieter-Alfred, Dipl.-Ing.
(86) Internationale Anmeldenummer: EP9603624
(87) Internationale Veröffentlichungsnummer: WO9709755

(56) Entgegenhaltungen:
- US-A- 4 637 242
- US-A- 5 038 461
- US-A- 5 113 679
- US-A- 5 224 251
- US-A- 5 271 254
- US-A- 5 303 462

## Beschreibung

Die Erfindung betrifft ein Verfahren zum Verbinden von seiloder kabelartigen Strängen mit Aufpreßelementen, bei dem das Aufpreßelement auf den Strang gesteckt sowie Strang und Aufpreßelement mittels eines Preßbakken aufweisenden Preßgeräts plastisch unter Verkleinerung des Materialquerschnitts radial verpreßt werden. Sie bezieht sich desweiteren auf ein Preßgerät zur Durchführung dieses Verfahrens mit in einer Preßebene zustellbaren Preßbacken und mit einem Zustellantrieb, der bei Erreichen einer Endstellung abstellbar ist. Dabei ist unter Preßebene eine Ebene zu verstehen, in der die Preßbacken zueinander beweglich sind und die sich beim Preßvorgang quer zur Längsachse des zu verpressenden Strangs erstreckt.

Im Stand der Technik ist es bekannt, Seile und Elektrokabel dadurch untereinander oder mit Anschlußstellen zu verbinden, daß man über ihre Enden als Verbindungsorgane ausgebildete Aufpreßelementen steckt und beide dann mit Hilfe eines Preßgeräts radial verpreßt (vgl. DE-A-19 35 996; EP 0̸ 604 828 A1). Dabei wird die Kombination aus Strang und Aufpreßelement plastisch unter Verkleinerung ihrer Haterialquerschnitte verformt. Unter Materialquerschnitt ist jeweils diejenige Querschnittsfläche bzw. die Summe von Querschnittsflächen zu verstehen, die ausschließlich von dem Material der jeweiligen Kombination selbst eingenommen wird. Besteht der Strang nicht aus Vollmaterial, sondern aus im Querschnitt kreisförmigen Litzen oder Adern, ist die Querschnittsfläche gewöhnlich kleiner als die Gesamtquerschnittsfläche, die der Strang aufgrund seiner ursprünglichen Außenabmessungen einnimmt, weil zwischen den Litzen und Adern sowie zwischen diesen und dem aufgesteckten Hülsenabschnitt des Verbindungsorgans Hohlräume vorhanden sind, die sich zu dem Materialquerschnitt addieren und mit diesem die ursprüngliche Gesamtquerschnittsfläche bilden.

Zum Verbinden von Elektrokabeln mit anderen Kabeln oder zum Anschließen von Kabeln an elektrischen Geräten kommen Aufpreßelemente wie Kabelschuhe, Kabelverbinder und Kabelhülsen zum Einsatz, welche für die Herstellung der Verbindung über das Ende des Elektrokabels gesteckt werden. Mit Hilfe einer sogenannten Kabelschuhpresse werden dann das Kabel einerseits und der Kabelschuh bzw. Kabelverbinder bzw. die Kabelhülse andererseits radial verpreßt. Solche Kabelschuhpressen sind beispielsweise der DE-C-32 35 0̸40̸ und der EP-A-0̸ 60̸4 828 zu entnehmen.

Für die Güte der Verbindung ist es wesentlich, daß der Verformungsgrad bzw. die Verpreßtiefe nicht zu gering, aber auch nicht zu hoch ist. Dies gilt insbesondere für die Verbindung von Kabeln mit Kabelschuhen oder dergleichen Verbinder. Ist der Verformungsgrad zu gering, liegt also eine Unterverpressung vor, ist die Zugfestigkeit der Verbindung und der elektrische Kontakt zwischen Strang und Aufpreßelement unzureichend. Bei einem zu großen Verformungsgrad, also einer Überverpressung, leidet die Zugfestigkeit des Strangs aufgrund der Verringerung des Strangquerschnitts. Außerdem treten aus demselben Grund zu hohe Stromdichten auf.

Bei einfachen Preßgeräten werden die Preßbacken bis zur gegenseitigen Anlage auf Block gefahren. Damit für jede Art von Kabeln und Kabelschuhen der richtige Verformungsgrad erreicht wird, ist es erforderlich, eine sehr große Anzahl an unterschiedlichen Preßbacken vorzuhalten. Dies ist umständlich und führt häufig zu Fehlgriffen bei der Auswahl der Preßbacken mit der Folge, daß die Güte der Verbindung unzureichend ist.

Man ist deshalb zu Preßgeräten übergegangen, bei denen die bewegliche Preßbacke mit Hilfe des Zustellantriebs zunächst bis zum Außendurchmesser des Aufpreßelements gefahren und von dort aus um einen festgelegten Betrag, dem der Verpreßtiefe, zugestellt wird. Solch eine Preßmethode setzt voraus, daß der Außendurchmesser des Aufpreßelements nur für eine definierte Kombination Hülse-Kabel festgelegt wird, meist für eine bestimmte Norm oder Reihe. Inwiefern es gelingt, aus einer Reihe von Außendurchmessern die Verpreßtiefe zu bestimmen, hängt von der jeweiligen Norm ab, da der Außendurchmesser des Aufpreßelements nichts über die Struktur von Strang und Aufpreßelement aussagt, beispielsweise darüber, welcher Hohlraumanteil vorhanden ist. Mit Hilfe eines solchen Preßgeräts ist somit nicht gesichert, daß die gewünschte Verbindungsgüte bei allen Kombinationen erreicht wird.

Bei anderen Preßgeräten wird so lange verpreßt, bis eine fest eingestellte Endkraft erreicht ist. Diese Methode ist noch ungenauer, da der Verformungsgrad stark von der Geometrie und der Materialfestigkeit des Kabels und des Kabelschuhs abhängig ist.

Der Erfindung liegt die Aufgabe zugrunde, ein Preßverfahren der eingangs genannten Art so zu gestalten, daß mit Hilfe eines bestimmten Preßgeräts mit oder ohne Werkzeugwechsel unterschiedlichste Kombinationen aus Strang und Aufpreßelement so verpreßt werden können, daß der für die Verbindung gewünschte Verformungsgrad mit hoher Sicherheit erreicht wird. Eine weitere Aufgabe besteht darin, ein Preßgerät für die Durchführung dieses Verfahrens bereitzustellen.

Die erstgenannte Aufgabe wird erfindungsgemäß dadurch gelöst, daß beim Verpressen der Längenzuwachs des Strangs und/oder des Aufpreßelements erfaßt und die Verpressung nach Erreichen eines vorbestimmten Endwerts (db) des Längenzuwachses beendet wird.

Diesem Verfahren liegt die schon zur Erfindung gehörende Erkenntnis zugrunde, daß metallische Werkstücke praktisch keiner Dichteänderung unterliegen, sofern sie noch einen Freiheitsgrad zur Ausdehnung haben. Dieser Freiheitsgrad ist bei der Verpressung eines Strangs mit übergestecktem Aufpreßelement in Längsrichtung, d. h. quer zur Preßebene gegeben. Tatsächlich läßt sich beim Verpressen solcher Teile über die Fließgrenze hinaus ein Längenzuwachs feststellen.

Der überraschende Vorzug dieses Verfahrens liegt darin, daß die Verbindungsgüte bei Verwendung eines bestimmten Preßgeräts immer gleich ist, wenn der vorbestimmte Endwert für den Längenzuwachs erreicht wird. Es besteht keine Abhängigkeit von der Art und Struktur sowie dem Material des Strangs und des Aufpreßelements. Auch die Durchmesser spielen keine Rolle. Die Verbindungsgüte ist jederzeit reproduzierbar und kontrollierbar.

Die Verbindungsgüte kann sogar unabhängig von der Art des Preßgeräts bzw. der Preßbacken im wesentlichen immer gleich gehalten werden, wenn zusätzlich die Lehre beachtet wird, daß der Endwert (db) in einem bestimmten prozentualen Verhältnis zur Breite der Preßbacken eingestellt wird. Dabei ist unter der Breite der Preßbacken deren Erstreckung quer zur Preßebene, d. h. parallel zur Längsachse des verpreßten Strangs zu verstehen. Dies macht das Verfahren besonders universell einsetzbar. Es ist lediglich notwendig, die Breite der Preßbacken festzustellen und anhand des vorbestimmten prozentualen Verhältnisses den Endwert des Längenzuwachses zu bestimmen. Eventuell von der Standardform solcher Preßbacken abweichenden Preßbacken, beispielsweise mit gerundeten oder keilförmigen Seiten, kann durch Berücksichtigung von Korrekturwerten Rechnung getragen werden. Das erfindungsgemäße Verfahren versetzt somit den Anwender in die Lage, eine bestimmte, gewünschte Verbindungsgüte mit einem beliebigen Preßgerät sicher und reproduzierbar zu verwirklichen. Dies stellt eine wesentliche Erleichterung für Hersteller wie Anwender dar.

Für die Festlegung des Endwerts (db) des Längenzuwachses muß ein Kompromiß gefunden werden. Bei einer rein mechanischen Verbindung ist ein Kompromiß zwischen einerseits einer guten Haftung zwischen Strang und Aufpreßelement und andererseits der durch jede Einschnürung beeinträchtigten Zugfestigkeit des Strangs zu suchen. Liegt ein elektrisches Kabel vor, sind zusätzlich die Veränderungen der elektrischen Eigenschaften zu berücksichtigen, die einerseits einen guten Kontakt zwischen Kabel und Aufpreßelement und andererseits einen noch ausreichenden Kabelquerschnitt verlangen. Es besteht die Möglichkeit, experimentell herauszufinden, bei welchem Verpressungsgrad ein brauchbarer oder sogar optimaler Kompromiß vorliegt, indem in Versuchsreihen festgestellt wird, wie die Zugfestigkeit und - soweit ein Kabel vorliegt - die elektrischen Eigenschaften sind. Der dabei mit Hilfe eines bestimmten Preßgeräts ermittelte Endwert (db) kann dann in ein prozentuales Verhältnis zur Breite der Preßbacken dieses Preßgeräts gesetzt werden. Unter Anwendung dieses prozentualen Verhältnisses können dann der Verpressungsgrad und damit die Verpressungsgüte mit jedem beliebigen Preßgerät reproduzierbar verwirklicht werden.

Für den am häufigsten vorkommenden Fall eines aus Drähten bestehenden Kabels und eines Kabelschuhs haben Berechnungen ergeben, daß ein optimaler Kompromiß zwischen mechanischen und elektrischen Eigenschaften dann erreicht wird, wenn der Endwert (db) im Bereich zwischen 20̸ und 22 % der Breite der Preßbacken liegt, idealerweise bei 20̸,9 %. Bei diesem Wert werden Kabel und Kabelschuh gerade so weit verpreßt, daß sich die Drähte des Kabels unter Bildung von sechseckigen Querschnitten so aneinanderlegen, daß zwischen Ihnen praktisch keine Luft mehr bleibt. Den Berechnungen liegt allerdings eine ideale kreissymmetrische Verpressung zugrunde. Die im Gebrauch befindlichen Preßbacken sind mehreckig, weshalb es zu örtlichen Über- und Unterverpressungen kommt. Außerdem sollte bei Sonderformen von Preßbacken die schon erwähnten Korrekturwerte berücksichtigt werden. Gleichwohl stellt der vorgenannte Bereich auch unter Berücksichtigung von im Handel befindlichen Preßbackengeometrien eine günstige Lösung dar.

Es liegt im Rahmen der Erfindung, daß von dem vorgenannten Bereich auch abgewichen wird, wenn der jeweilige Anwendungsfall es günstiger erscheinen läßt, niedrigere oder höhere Prozentsätze für den Endwert (db) im Verhältnis zur Breite der Preßbacken zu verwirklichen.

Das erfindungsgemäße Verfahren kann auch zur Kontrolle der Funktionsfähigkeit des Preßgeräts verwendet werden. Wird mit Hilfe des Preßgeräts der Endwert des Längenzuwachses nicht erreicht, ist das Preßgerät für die jeweilige Kombination aus Strang und Aufpreßelement nicht geeignet, oder der Zustellantrieb des Preßgeräts ist aufgrund von Verschleiß nicht mehr in der Lage, den erforderlichen Preßdruck aufzubringen.

Bei der Verpressung von Vollmaterialquerschnitten wird die Querschnittsverringerung unmittelbar in einen Längenzuwachs umgesetzt. Sofern der Strang aus einer Mehrzahl oder Vielzahl von Litzen oder Drähten besteht, enthält das Werkstück Hohlräume. Ist der Hohlraumanteil relativ groß, kann zu Beginn des Preßvorgangs zunächst eine Längenverkürzung zumindest des übergesteckten Aufpreßelements eintreten. Sofern dessen Längenzuwachs nach dem erfindungsgemäßen Verfahren erfaßt wird, ist es empfehlenswert, daß mit der Erfassung des Längenzuwachses begonnen wird, wenn sich das Teil, dessen Längenzuwachs erfaßt wird, von der Preßstelle weg ausdehnt. Es wird also hierbei der absolute Längenzuwachs gegenüber dem Ausgangszustand zuzüglich des Betrags der anfänglichen Längenverkürzung herangezogen, da dieses Haß in Korrelation zu der Haterialquerschnittsverringerung und damit zur Verbindungsgüte steht.

Soweit die Aufgabe sich auf die Bereitstellung eines Preßgeräts zur Durchführung des Verfahren bezieht, besteht die Lösung dieser Aufgabe darin, daß das Preßgerät eine Meßeinrichtung zur Erfassung des Längenzuwachses des Strangs und/oder des Aufpreßelements beim Verpressen aufweist. Dabei kann die Erfassung des Längenzuwachses verschiedenartig für die Handhabung des Preßgeräts genutzt werden.

So kann die Meßeinrichtung mit einer Anzeigeeinrichtung zur Darstellung zumindest eines Endwerts des Längenzuwachses versehen sein. Die Anzeigeeinrichtung kann eine digitale oder analoge Anzeige aufweisen. Ausreichend ist jedoch schon, wenn die Anzeigeeinrichtung lediglich für eine optische Signalgabe bei Erreichen des Endwerts ausgebildet ist, da dieser Wert maßgebend für die vorgesehene Verbindungsgüte ist. Daneben besteht die Möglichkeit, die Meßeinrichtung mit einer akustischen Signalgabeeinrichtung zu versehen, mit der wenigstens bei Erreichen des Endwerts eine Signalgabe bewirkbar ist.

Sowohl die optische oder akustische Signalgabe als auch die digitale oder analoge Weganzeige haben den Nachteil, daß die Bedienungsperson des Preßgeräts bei Wahrnehmung des Endwerts eingreifen, also den Zustellantrieb abschalten muß. Sicherer ist es, wenn die Meßeinrichtung derart mit dem Zustellantrieb gekoppelt ist, daß der Zustellantrieb bei Erfassen des Endwerts automatisch abgeschaltet wird. Auf diese Weise ist gesichert, daß die vorgesehene Verbindungsgüte zuverlässig erreicht wird und insbesondere keine Überverpressung stattfindet.

In weiterer Ausgestaltung der Erfindung ist vorgesehen, daß der Endwert einstellbar ist. Dies ist insbesondere dann nützlich, wenn das Preßgerät mit unterschiedlichen Preßbacken betrieben wird, denn jede Preßbackenkombination hat einen an sie angepaßten und damit charakteristischen Endwert für den Längenzuwachs.

Für die Erfassung des Längenzuwachses kann die Meßeinrichtung ein am Aufpreßelement und/oder Strang ansetzbares Geberelement aufweisen. Dies kann beispielsweise ein zugespitzter Stab sein, der in der Lage ist, sich formschlüssig in die Außenseite des Aufpreßelements oder Strangs einzukrallen und deshalb dessen Längenänderung mitmacht. Das Geberelement ist zweckmäßigerweise derart beweglich gelagert, daß es eine Bewegung senkrecht zur Preßebene ausführen kann. Dabei sollte das Geberelement in Ansetzrichtung - also quer zum Aufpreßelement - beweglich gelagert und beispielsweise mit Hilfe einer Feder in Richtung auf das Aufpreßelement vorgespannt sein.

Damit das Geberelement beweglich ist, kann es um eine Achse parallel zur Preßebene schwenkbar gelagert sein. Alternativ dazu ist auch eine verschiebliche Lagerung senkrecht zur Preßebene möglich. Schließlich kann das Geberelement auch fest eingespannt sein, wenn es senkrecht zur Preßebene biegsam ausgebildet ist.

In allen diesen Fällen sollte ein Sensor zur Erfassung der Bewegung des Geberelements vorgesehen sein, beispielsweise ein Schalter, eine Lichtschranke, ein Magnetsensor, ein Induktionssensor oder dergleichen. Über den Sensor kann dann die den Endwert repräsentierende Endstellung des Geberelements erfaßt und in Form eines elektrischen Signals der Meßeinrichtung zwecks weiterer Verarbeitung im vorbeschriebenen Sinn zugeführt werden. Stattdessen besteht aber auch die Möglichkeit, daß der Zustellantrieb als Hydraulikantrieb ausgebildet ist und das Geberelement direkt mit einem Abschaltventil des Hydraulikantriebs verbunden ist. Eine solche rein mechanische Lösung hat den Vorzug, daß sie von einer Stromquelle unabhängig ist.

Schließlich ist gemäß der Erfindung vorgesehen, daß das Geberelement als ein zumindest senkrecht zur Preßebene elastisch verformbarer Körper ausgebildet ist, der reibschlüssig an der Außenseite des Aufpreßelements und/oder Strangs ansetzbar ist und in den elektrisch leitfähige Fasern nach Art eines Dehnungsmeßstreifens derart eingelagert sind, daß bei Anlegen einer elektrischen Spannung und Verformung des Körpers senkrecht zur Preßebene eine der Verformung entsprechende Signalgabe für die Meßeinrichtung erfolgt.

In der Zeichnung ist die Erfindung anhand von Ausführungsbeispielen in jeweils schematischer Darstellung näher veranschaulicht. Es zeigen:
- Figur 1: ein Preßgerät mit Meßeinrichtung in der Seitenansicht;
- Figur 2: das Preßgerät gemäß Figur 1 in der Draufsicht;
- Figur 3: ein zweites Preßgerät mit Heßeinrichtung in der Draufsicht;
- Figur 4: ein drittes Preßgerät mit Meßeinrichtung in der Draufsicht;
- Figur 5: ein viertes Preßgerät mit Meßeinrichtung in der Draufsicht und
- Figur 6: ein fünftes Preßgerät mit einer Meßeinrichtung.

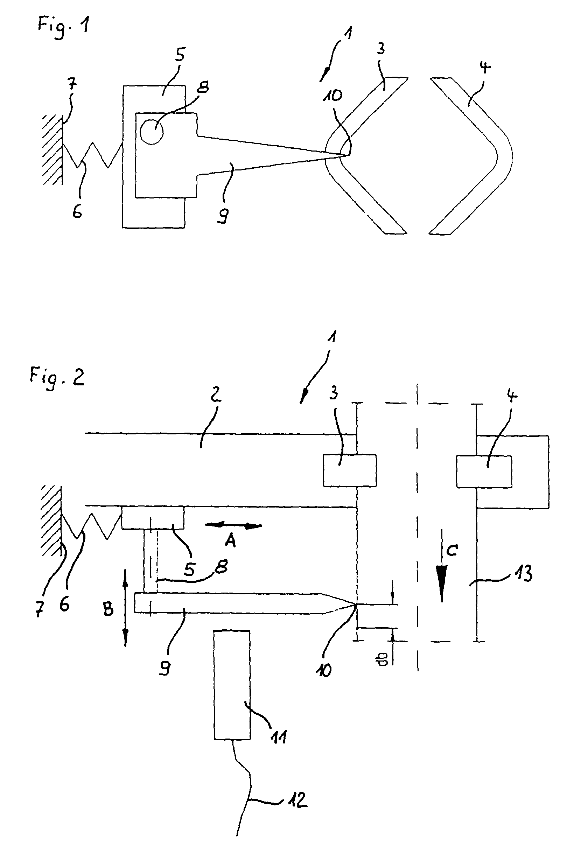

Das in den Figuren 1 und 2 dargestellte Preßgerät 1 weist einen Gerätekörper 2 auf, der in Figur 1 der Übersichtlichkeit halber weggelassen ist und an dem zwei gegenüberliegende, V-förmige Preßbacken 3, 4 sitzen. Mit Hilfe eines hier nicht näher dargestellten Zustellantriebes, beispielsweise einer hydraulischen Kolben-Zylinder-Einheit, ist die linksseitige Preßbacke 3 in Richtung auf die rechtsseitige Preßbacke 4 verschiebbar.

An dem Gerätekörper 2 sind Teile einer Meßeinrichtung angeordnet. Hierzu gehört ein Tragsockel 5, der in Figur 2 in der Zeichnungsebene verschieblich in den Richtungen des Doppelpfeils A geführt ist. Er ist in Richtung auf die Preßbacken 3, 4 über eine Feder 6 vorgespannt, die sich an einem gerätefesten Teil 7 des Preßgeräts 1 abstützt. An dem Tragsockel 5 ist eine Achse 8 angeordnet, die senkrecht zur Zeichnungsebene gemäß Figur 1 verläuft und die axial verschieblich in dem Tragsockel 5 geführt ist, und zwar in den Richtungen des Doppelpfeils B. Auf dem Ende der Achse 8 sitzt ein Geberstab 9, der an seinem freien Ende eine Spitze 10̸ aufweist. Dem Geberstab 9 ist ein induktiver Wegsensor 11 zugeordnet, der über eine elektrische Leitung 12 mit einer hier nicht näher dargestellten Auswerteeinrichtung verbunden ist, die ebenfalls Teil der Meßeinrichtung ist. Der Sensor 11 ist ortsfest an dem Gerätekörper 2 gehalten.

Bei der Darstellung gemäß Figur 2 ist das Preßgerät 1 an eine Kombination aus einem Kabel - hier nicht zu sehen - und einem darübergesteckten Kabelschuh 13 als Aufpreßelement derart angesetzt, daß diese Kombination von den Preßbacken 3, 4 eingefaßt wird. Aufgrund der Vorspannung durch die Feder 6 wird die Spitze 10̸ des Geberstabs 9 so gegen die Außenseite des Kabelschuhs 13 gepreßt, daß sie sich an ihm formschlüssig einkrallt, zumindest jedoch Reibschluß besteht.

Nach Anlage der Spitze 10̸ an der Außenseite des Kabelschuhs 13 kann der Preßvorgang gestartet werden. Hierzu wird die Preßbacke 3 gegen die Preßbacke 4 bewegt. Dies hat eine radiale Einschnürung des Querschnitts von Kabel und Kabelschuh 13 zur Folge. Das durch die Preßbacken 3, 4 verdrängte Material von Kabel und Kabelschuh 13 führt zu einem Längenzuwachs db der Kombination aus Kabel und Kabelschuh 13. Aufgrund des Form- oder zumindest Reibschlusses zwischen Spitze 10̸ und Außenseite des Kabelschuhs 13 wird der Geberstab 9 in Richtung des Pfeils C und damit in Richtung auf den Sensor 11 mitgenommen, d. h. er wird in dieser Richtung parallel verschoben. Die Verschiebung führt zu einer Veränderung der Induktivität in dem Wegsensor 11. Bei Erreichen eines in der Auswerteeinrichtung gespeicherten Wertes für die Induktivität erfolgt entweder eine optische oder akustische Signalgabe, oder es wird automatisch der Zustellantrieb für die Preßbacke 3 abgeschaltet.

Der Längenzuwachs db korreliert mit der Materialverdrängung in der Preßebene, bewirkt durch die Preßbacken 3, 4. Der Endwert db des Längenzuwachses ist für das hier verwendete Preßgerät 1 so bestimmt worden, daß ein möglichst optimales Verhältnis zwischen Endmaterialquerschnit und Ausgangsmaterialquerschnitt und damit eine optimale Verbindungsgüte erzielt wird. Wird mit diesem Preßgerät 1 immer der Endwert db des Längenzuwachses erreicht, ist die Verbindungsgüte unabhängig davon, wie die Kombination aus Kabel und Kabelschuh 13 beschaffen ist, immer gleich.

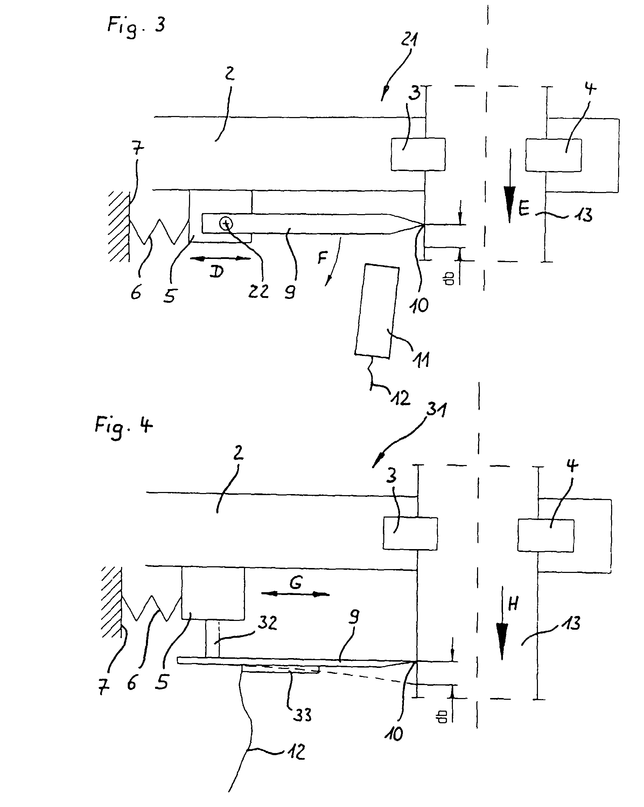

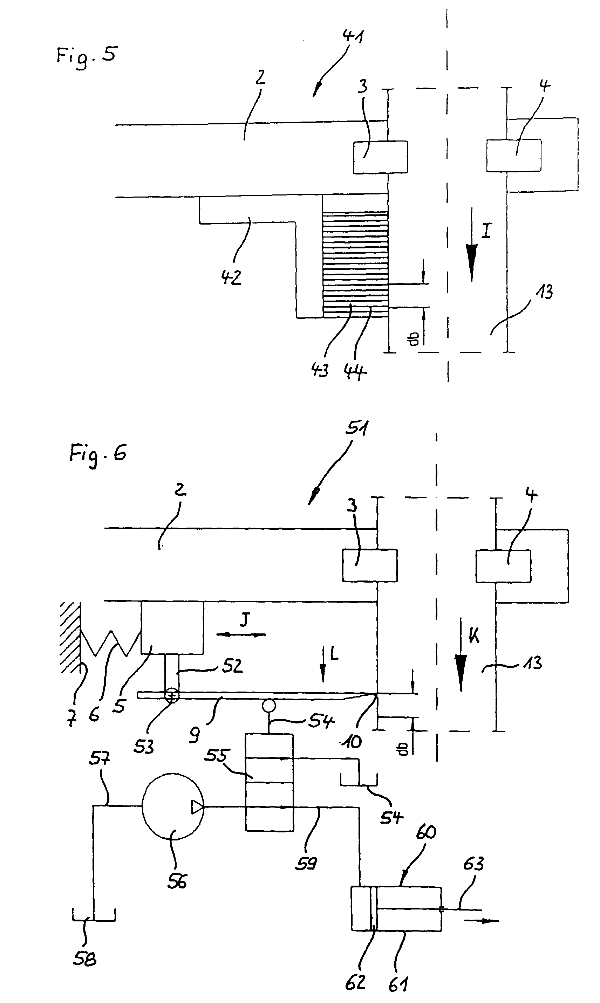

Die Figuren 3 und 4 zeigen Variationen des Preßgeräts 1 gemäß den Figuren 1 und 2. Dabei sind gleiche oder sich entsprechende Bauteile mit den gleichen Bezugsziffern versehen.

Das in Figur 3 dargestellte Preßgerät 21 hat - wie bei dem nach den Figuren 1 und 2 - einen Gerätekörper 2 und zwei gegenüberliegende Preßbacken 3, 4. An dem Gerätekörper 2 ist auch ein zur Meßeinrichtung gehörender Tragsockel 5 verschieblich in den Richtungen des Doppelpfeils D gelagert, wobei er in Richtung auf die Preßbacken 3, 4 durch eine Feder 6 vorgespannt ist, die sich an einem gerätefesten Teil 7 des Gerätekörpers 2 abstützt. An dem Tragsockel 5 befindet sich eine sich senkrecht zur Zeichnungsebene erstreckende Schwenkachse 22, auf der ein Geberstab 9 sitzt. Der Geberstab 9 hat am freien Ende eine Spitze 10̸. Dem Geberstab 9 zugeordnet ist ein induktiver Wegsensor 11, der über eine Leitung 12 mit der Auswerteeinrichtung der Meßeinrichtung verbunden ist.

Zwischen den Preßbacken 3, 4 befindet sich eine Kombination aus Kabel und Kabelschuh 13. An der Außenseite des Kabelschuhs 13 liegt die Spitze 10̸ des Geberstabs 9 formschlüssig oder doch zumindest reibschlüssig an.

Mit Einleitung des Preßvorgangs durch Aktivierung des hier nicht näher dargestellten Zustellantriebs und damit durch Annäherung der Preßbacken 3, 4 wird in der Preßebene Material des Kabels und des Kabelschuhs 13 verdrängt, was zu einem Längenzuwachs in Richtung des Pfeils E führt. Dies wiederum hat eine Schwenkbewegung des Geberstabs 9 um die Schwenkachse 22 in Richtung des Pfeils F zur Folge. Dies führt zu einer Induktionsänderung in dem Wegsensor 11, die über die Leitung 12 an die Auswerteeinrichtung geht. Dort ist ein Schwellenwert so eingestellt, daß nach Erreichen des Endwerts db des Längenzuwachses eine optische oder akustische Signalgabe erfolgt oder der Zustellantrieb automatisch abgeschaltet wird.

Die Ausbildung gemäß Figur 4 ist ähnlich derjenigen gemäß den Figuren 1 bis 3. Ein Preßgerät 31 hat einen Gerätekörper 2 und Preßbacken 3, 4, die mit Hilfe eines nicht dargestellten Zustellantriebs gegeneinander bewegbar sind. An dem Gerätekörper 2 ist ein Tragsockel 5 in den Richtungen des Doppelpfeils G verschieblich gelagert. Er ist in Richtung auf die Preßbacken 3, 4 mit Hilfe einer Feder 6 vorgespannt, die sich an einem gerätefesten Teil 7 des Gerätekörpers 2 abstützt. An dem Tragsockel 5 ist eine Verlängerung 32 befestigt, an deren freiem Ende ein Geberstab 9 angebracht ist, und zwar starr. Der Geberstab 9 ist quer zur Preßebene, d. h. in Richtung des Pfeils H, biegsam und hat an seinem freien Ende eine Spitze 10̸. Auf der Oberfläche des Geberstabs 9 ist ein ein Piezokristall aufweisender Sensor 33 angebracht, der über eine Leitung 12 mit der Auswerteeinrichtung einer Meßeinrichtung verbunden ist.

Zwischen die Preßbacken 3, 4 ist eine Kombination aus Kabel und Kabelschuh 13 eingelegt. Beim Zusammenführen der Preßbacken 3, 4 kommt es auch hier zu einem Längenzuwachs in Richtung des Pfeils H aufgrund der Materialverdrängung in der Preßebene. Dabei verbiegt sich der form- oder reibschlüssig an der Außenseite des Kabelschuhs 13 anliegende Geberstab 9, was über den Sensor 33 erfaßt und an die Auswerteeinrichtung weitergegeben wird. Bei Erreichen eines dort gespeicherten Wertes wird der Zustellantrieb des Preßgeräts 31 abgeschaltet. Es ist dann der Endwert db des Längenzuwachses erreicht. Die Verbiegung des Geberstabs 9 ist gestrichelt dargestellt.

In Figur 5 ist ein Preßgerät 41 dargestellt, das einen Gerätekörper 2 und gegenüberliegende Preßbacken 3, 4 aufweist, welche mit Hilfe eines nicht dargestellten Zustellantriebs in der Zeichnungsebene gegeneinander verfahren werden können. An dem Gerätekörper 2 ist ein Haltewinkel 42 angebracht, der - was hier nicht näher dargestellt ist - ähnlich wie die Tragsockel 5 in den vorangegangenen Beispielen in Richtung auf die Preßbacken 3, 4 verschieblich gelagert und vorgespannt ist. An dem quer zum Gerätekörper 2 verlaufenden Teil des Haltewinkels 42 ist ein Gummikörper 43 befestigt, in den eine Vielzahl von elektrisch leitenden Fasern - beispielhaft mit 44 bezeichnet - eingelassen sind. Sie sind Teil eines hier nicht näher dargestellten Stromkreises. Bei einer Lageveränderung der Fasern 44 durch elastische Verformung des Gummikörpers 43 in Richtung quer zur Preßebene ändern sich die elektrischen Werte des Stromkreises.

Zwischen die Preßbacken 3, 4 ist eine Kombination aus Kabel und Kabelschuh 13 eingelegt. Der Gummikörper 43 liegt auf der Außenseite des Kabelschuhs 13 reibschlüssig an. Beim Verpressen der Kombination aus Kabel und Kabelschuh 13 kommt es - wie schon oben im einzelnen beschrieben - zu einem Längenzuwachs des Kabelschuhs 13, wobei die Anlagefläche des Gummikörpers 43 mitgenommen wird. Der Gummikörper 43 verformt sich also elastisch mit der Folge, daß sich die elektrischen Werte im Stromkreis der Fasern 44 ändern. Bei Erreichen eines bestimmten, in der Auswerteeinrichtung gespeicherten Wertes wird die Zustelleinrichtung für die Preßbacken 3, 4 abgeschaltet. Es ist dann der Endwert db des Längenzuwachses in Richtung des Pfeils I erreicht.

Figur 6 zeigt ein Preßgerät 51 mit einem Gerätekörper 2 und gegenüberliegenden Preßbacken 3, 4. Wie in den Beispielen gemäß den Figuren 1 bis 4 ist ein Tragsockel 5 verschieblich in den Richtungen des Doppelpfeils J an dem Gerätekörper 2 gelagert, wobei er durch eine Feder 6 in Richtung der Preßbacken 3, 4 vorgespannt ist, welche sich an einem gerätefesten Teil 7 des Gerätekörpers 2 abstützt. Der Tragsockel 5 hat eine Verlängerung 52, an deren freiem Ende ein Schwenkgelenk 53 mit einer Schwenkachse senkrecht zur Zeichnungsebene angebracht ist. An dem Schwenkgelenk 53 sitzt ein Geberstab 9, der an seinem freien Ende mit einer Spitze 10̸ versehen ist. An der Außenseite des Geberstabs 9 zwischen Schwenkgelenk 53 und Spitze 10̸ stützt sich ein Ventilstößel 54 ab, der mit einem Hydraulikventil 55 verbunden ist. Diesem Hydraulikventil 55 zugeordnet ist auf der einen Seite eine Hydraulikpumpe 56, die über eine Leitung 57 mit einem Hydraulikölreservoir 58 verbunden ist.

Von der Hydraulikpumpe 56 geht eine Ausgangsleitung 59 durch das hier in Offenstellung gezeigte Hydraulikventil 55 zu einem Zustellantrieb 60̸, der aus einem Hydraulikzylinder 61, einem darin geführten Hydraulikkolben 62 und einer aus dem Hydraulikzylinder 61 herausragenden Kolbenstange 63 besteht. Der Hydraulikzylinder 61 ist - was hier nicht näher dargestellt ist - geräte fest mit dem Gerätekörper 2 verbunden, während die Kolbenstange 63 mit der beweglichen Preßbacke 3 verbunden ist.

Zwischen die Preßbacken 3, 4 ist eine Kombination aus Kabel und Kabelschuh 13 eingelegt. An ihm liegt form- oder zumindest reibschlüssig die Spitze 10̸ des Geberstabs 9 an. Der Preßvorgang wird eingeleitet, wenn das von der Hydraulikpumpe 56 geförderte Hydrauliköl durch öffnen des Hydraulikventils 55 in den Hydraulikzylinder 61 gelangt. Hierdurch werden die Preßbacken 3, 4 gegeneinander bewegt, was zu einer radialen Einschnürung der Kombination aus Kabel und Kabelschuh 13 führt. Diese Einschnürung hat zur Folge, daß der Kabelschuh 13 einen Längenzuwachs in Richtung des Pfeils K erhält. Dabei wird die Spitze 10̸ des Geberstabs 9 in Richtung des Pfeils L bewegt. Die Verschwenkung des Geberstabs 9 führt zu einer Betätigung des Hydraulikventils 55. Dabei ist das Hydraulikventil 55 so eingestellt, daß bei Erreichen des Endwerts db des Längenzuwachses die Ölversorgung zu dem Hydraulikzylinder 61 sperrt und das dann geförderte Öl in einen Ausgleichsbehälter 64 fließt, von dem es wieder zurück in das Hydraulikölrevervoir 58 geht.

## Patentansprüche

1. Verfahren zum Verbinden von seil- oder kabelartigen Strängen mit Aufpreßelementen (13), bei dem das Aufpreßelement (13) auf den Strang gesteckt sowie Strang und Aufpreßelement (13) mittels eines Preßbacken (3, 4) aufweisenden Preßgeräts (1, 11, 31, 41, 51) plastisch unter Verkleinerung des Materialquerschnitts radial verpreßt werden,
dadurch gekennzeichnet, daß beim Verpressen der Längenzuwachs des Strangs und/oder des Aufpreßelements (13) erfaßt und die Verpressung nach Erreichen eines vorbestimmten Endwerts (db) des Längenzuwachses beendet wird.

2. Verfahren nach Anspruch 1,
dadurch gekennzeichnet, daß mit der Erfassung des Längenzuwachses begonnen wird, wenn sich das Teil (13), dessen Längenzuwachs erfaßt wird, von der Preßstelle weg ausdehnt.

3. Verfahren nach Anspruch 1 oder 2,
dadurch gekennzeichnet, daß die Verpressung bei einem Endwert (db) beendet wird, der in einem bestimmten prozentualen Verhältnis zur Breite der Preßbacken (3, 4) steht.

4. Verfahren nach Anspruch 3,
dadurch gekennzeichnet, daß die Verpressung bei einem Endwert (db) beendet wird, der in einem Bereich von 20̸ bis 22 % der Breite der Preßbacken (3, 4) liegt.

5. Preßgerät (1, 11, 31, 41, 51) zur Durchführung des Verfahrens nach einem der Ansprüche 1 bis 4 mit in einer Preßebene zustellbaren Preßbacken (3, 4) und mit einem Zustellantrieb (60̸), der bei Erreichen einer Endstellung abschaltbar ist, dadurch gekennzeichnet, daß das Preßgerät (1, 11, 31, 41, 51) eine Meßeinrichtung zur Erfassung des Längenzuwachses des Strangs und/oder des Aufpreßelements (13) beim Verpressen aufweist.

6. Preßgerät nach Anspruch 5,
dadurch gekennzeichnet, daß die Meßeinrichtung mit einer Anzeigeeinrichtung zur Darstellung zumindest eines Endwerts (db) des Längenzuwachses versehen ist.

7. Preßgerät nach Anspruch 6,
dadurch gekennzeichnet, daß die Anzeigeeinrichtung eine digitale oder analoge Anzeige aufweist.

8. Preßgerät nach Anspruch 6 oder 7,
dadurch gekennzeichnet, daß die Anzeigeeinrichtung für eine optische Signalgabe bei Erreichen des Endwerts ausgebildet ist.

9. Preßgerät nach einem der Ansprüche 5 bis 8,
dadurch gekennzeichnet, daß die Meßeinrichtung mit einer akustischen Signalgabeeinrichtung versehen ist, mit der wenigstens bei Erreichen des Endwerts (db) eine Signalgabe bewirkbar ist.

10. Preßgerät nach einem der Ansprüche 5 bis 8,
dadurch gekennzeichnet, daß die Meßeinrichtung derart mit dem Zustellantrieb (60̸) gekoppelt ist, daß der Zustellantrieb (60̸) bei Erfassen des Endwerts (db) automatisch abgeschaltet wird.

11. Preßgerät nach einem der Ansprüche 5 bis 10̸,
dadurch gekennzeichnet, daß der Endwert (db) einstellbar ist.

12. Preßgerät nach einem der Ansprüche 6 bis 11,
daß die Meßeinrichtung ein am Strang und/oder Hülsenabschnitt (13) ansetzbares Geberelement (9) aufweist.

13. Preßgerät nach Anspruch 12,
dadurch gekennzeichnet, daß das Geberelement (9) derart beweglich gelagert ist, daß es eine Bewegung senkrecht zur Preßebene ausführen kann.

14. Preßgerät nach Anspruch 12 oder 13,
dadurch gekennzeichnet, daß das Geberelement (9) in Ansetzrichtung beweglich gelagert und vorgespannt ist.

15. Preßgerät nach Anspruch 13 oder 14,
dadurch gekennzeichnet, daß das Geberelement (9) um eine Achse parallel zur Preßebene schwenkbar gelagert ist.

16. Preßgerät nach einem der Ansprüche 12 bis 14,
dadurch gekennzeichnet, daß das Geberelement (9) senkrecht zur Preßebene verschieblich gelagert ist.

17. Preßgerät nach Anspruch 12,
dadurch gekennzeichnet, daß das Geberelement (9) senkrecht zur Preßebene biegsam ist.

18. Preßgerät nach einem der Ansprüche 12 bis 17,
dadurch gekennzeichnet, daß ein Sensor (11, 33) zur Erfassung der Bewegung des Geberelements (9) vorgesehen ist.

19. Preßgerät nach einem der Ansprüche 12 bis 17,
dadurch gekennzeichnet, daß der Zustellantrieb (60̸) als Hydraulikantrieb ausgebildet ist und das Geberelement (9) direkt mit einem Abschaltventil (55) des Hydraulikantriebs verbunden ist.

20. Preßgerät nach Anspruch 12,
dadurch gekennzeichnet, daß das Geberelement als ein zumindest senkrecht zur Preßebene elastisch verformbarer Körper (43) ausgebildet ist, in den elektrisch leitfähige Fasern derart eingelagert sind, daß bei Anlegen einer elektrischen Spannung und Verformung des Körpers (43) senkrecht zur Preßebene eine der Verformung entsprechende Signalgabe für die Meßeinrichtung erfolgt.

## Claims

1. Process for joining rope- or cable-like cords with press-on elements (13), in which the press-on element (13) is pushed onto the cord and both cord and press-on element (13) are plastically radially compressed by means of a pressure device (1, 11, 31, 41, 51) comprising pressure jaws (3, 4), whilst reducing the cross-section of the material, **characterised in that** during compression the longitudinal extension of the cord and/or the press-on element (13) is gauged and the compression is terminated on arriving at a predetermined end value (db) of the longitudinal extension.

2. Process according to Claim 1, **characterised in that** gauging the longitudinal extension commences when the part (13) the longitudinal extension of which is being gauged extends away from the point of pressure.

3. Process according to Claim 1 or 2, **characterised in that** compression is terminated at an end value (db) which lies within a specified percentage ratio to the width of the pressure jaws (3, 4).

4. Process according to Claim 3, **characterised in that** compression is terminated at an end value (db) which lies within a range between 20 and 22% of the width of the pressure jaws (3, 4).

5. Pressure device (1, 11, 31, 41, 51) for carrying out the process according to one of Claims 1 to 4, comprising pressure jaws (3, 4) which can be set in a pressure plane and with a delivery drive (60) which can be switched off on arriving at an end position, **characterised in that** the pressure device (1, 11, 31, 41, 51) comprises a measuring device for gauging the longitudinal extension of the cord and/or the press-on element (13) during compression.

6. Pressure device according to Claim 5, **characterised in that** the measuring device is provided with a display mechanism for displaying at least an end value (db) of the longitudinal extension.

7. Pressure device according to Claim 6, **characterised in that** the display mechanism comprises a digital or analog display.

8. Pressure device according to Claim 6 or 7, **characterised in that** the display mechanism is designed for optical signalling on arriving at the end value.

9. Pressure device according to one of Claims 5 to 8, **characterised in that** the measuring device is provided with an acoustic signalling device by means of which a signal can be given at least on arriving at the end value (db).

10. Pressure device according to one of Claims 5 to 8, **characterised in that** the measuring device is coupled with a delivery drive (60) in such a manner that the delivery drive (60) is automatically switched off on arriving at the end value (db).

11. Pressure device according to one of Claims 5 to 10, **characterised in that** the end value (db) can be set.

12. Pressure device according to one of Claims 6 to 11, **characterised in that** the measuring device comprises a transmitting element (9) which can be placed on the cord and/or sleeve section (13).

13. Pressure device according to Claim 12, **characterised in that** the transmitting element (9) is movably mounted in such a manner that it can perform a movement vertically to the pressure plane.

14. Pressure device according to Claim 12 or 13, **characterised in that** the transmitting element (9) is mounted and preclamped so as to be movable in the setting direction.

15. Pressure device according to Claim 13 or 14, **characterised in that** the transmitting element (9) is mounted so as to be pivotal around an axis parallel to the pressure plane.

16. Pressure device according to one of Claims 12 to 14, **characterised in that** the transmitting element (9) is mounted so as to be pivotal vertically to the pressure plane.

17. Pressure device according to Claim 12, **characterised in that** the transmitting element (9) is flexible vertically to the pressure plane.

18. Pressure device according to one of Claims 12 to 17, **characterised in that** a sensor (11, 33) is provided for gauging movement of the transmitting elements (9).

19. Pressure device according to one of Claims 12 to 17, **characterised in that** the delivery drive (60) is designed as a hydraulic drive, and the transmitting element (9) is directly connected to a switch-off valve (55) of the hydraulic drive.

20. Pressure device according to Claim 12, **characterised in that** the transmitting element is designed as a body (43) which is elastically shapeable at least vertically to the pressure plane and into which are inserted electrically ducting fibres in such a manner that on application of an electrical voltage and shaping of the body (43) vertically to the pressure plane a signal which corresponds with the shaping for the measuring device is emitted.

## Revendications

1. Procédé pour assembler des brins semblables à une corde ou à un câble au moyen d'éléments de compression (13), selon lequel l'élément de compression (13) est enfoncé sur le brin et le brin et l'élément de compression (13) sont comprimés de façon plastique en direction radiale avec rétrécissement de la section du matériau au moyen d'un dispositif de compression (1, 11, 31, 41, 51) muni de mâchoires de compression (3, 4), caractérisé en ce que, lors de la compression, l'allongement du brin et/ou de l'élément de compression (13) est mesuré, et la compression est achevée lorsqu'une valeur finale (db) d'allongement prédéterminée est atteinte.

2. Procédé selon la revendication 1, caractérisé en ce que l'on commence à mesurer l'allongement lorsque la partie (13) dont l'allongement est mesuré s'allonge à partir du point de compression.

3. Procédé selon la revendication 1 ou 2, caractérisé en ce que la compression s'achève lorsqu'une valeur finale (db) est atteinte, laquelle est un certain pourcentage de la largeur des mâchoires (3, 4).

4. Procédé selon la revendication 3, caractérisé en ce que la compression s'achève lorsqu'une valeur finale (db) est atteinte, laquelle se situe dans une fourchette comprise entre 20 et 22 % de la largeur des mâchoires de compression (3, 4).

5. Dispositif de compression (1, 11, 31, 41, 51) pour mettre en oeuvre le procédé selon l'une des revendications 1 à 4, comprenant des mâchoires de compression (3, 4) pouvant être avancées dans un plan de compression et un mécanisme d'avance (60) pouvant être coupé lorsqu'une position finale est atteinte, caractérisé en ce que le dispositif de compression (1, 11, 31, 41, 51) présente un dispositif de mesure pour mesurer l'allongement du brin et/ou de l'élément de compression (13) lors de la compression.

6. Dispositif de compression selon la revendication 5, caractérisé en ce que le dispositif de mesure est muni d'un dispositif d'affichage pour afficher au moins une valeur finale (db) de l'allongement.

7. Dispositif de compression selon la revendication 6, caractérisé en ce que le dispositif d'affichage présente un affichage numérique ou analogique.

8. Dispositif de compression selon la revendication 6 ou 7, caractérisé en ce que le dispositif d'affichage est conçu pour fournir un signal optique lorsque la valeur finale est atteinte.

9. Dispositif de compression selon l'une des revendications 5 à 8, caractérisé en ce que le dispositif de mesure est muni d'un dispositif de signalisation acoustique avec lequel un signal peut être déclenché au moins lorsque la valeur finale (db) est atteinte.

10. Dispositif de compression selon l'une des revendications 5 à 8, caractérisé en ce que le dispositif de mesure est couplé au mécanisme d'avance (60) de telle manière que le mécanisme d'avance (60) est coupé automatiquement lorsque la valeur finale (db) est atteinte.

11. Dispositif de compression selon l'une des revendications 5 à 10, caractérisé en ce que la valeur finale (db) est réglable.

12. Dispositif de compression selon l'une des revendications 6 à 11, caractérisé en ce que le dispositif de mesure comporte un émetteur (9) pouvant être placé au niveau du brin et/ou du manchon (13).

13. Dispositif de compression selon la revendication 12, caractérisé en ce que l'émetteur (9) est monté mobile de telle manière qu'il peut effectuer un mouvement perpendiculaire au plan de compression.

14. Dispositif de compression selon la revendication 12 ou 13, caractérisé en ce que l'émetteur (9) est monté mobile et précontraint dans la direction de l'endroit où il est positionné.

15. Dispositif de compression selon la revendication 13 ou 14, caractérisé en ce que l'émetteur (9) est monté pivotant autour d'un axe parallèlement au plan de compression.

16. Dispositif de compression selon l'une des revendications 12 à 14, caractérisé en ce que l'émetteur (9) est monté mobile perpendiculairement au plan de compression.

17. Dispositif de compression selon la revendication 12, caractérisé en ce que l'émetteur (9) peut se courber perpendiculairement au plan de compression.

18. Dispositif de compression selon l'une des revendications 12 à 17, caractérisé en ce qu'est prévu un capteur (11, 33) pour capter le mouvement de l'émetteur (9).

19. Dispositif de compression selon l'une des revendications 12 à 17, caractérisé en ce que le mécanisme d'avance (60) est réalisé en tant que commande hydraulique, et en ce que l'émetteur (9) est relié directement à une vanne d'arrêt (55) de la commande hydraulique.

20. Dispositif de compression selon la revendication 12, caractérisé en ce que l'émetteur est réalisé en tant que corps déformable élastiquement (43) au moins perpendiculairement au plan de compression, dans lequel des fibres conductrices de courant sont incorporées de telle manière qu'en appliquant une tension électrique et en déformant le corps (43) perpendiculairement au plan de compression, un signal correspondant à la déformation est donné au dispositif de mesure.
